# EUROPÄISCHE PATENTSCHRIFT

(11) **EP 2 535 214 B1**
(45) Veröffentlichungstag und Bekanntmachung des Hinweises auf die Patenterteilung: **08.01.2014**
(21) Anmeldenummer: 12165605.2
(22) Anmeldetag: 26.04.2012
(51) Int. Cl.: B60H 1/00

(54) **Verfahren zum Klimatisieren eines Kraftfahrzeuginnenraums**
Method for air conditioning the interior of a motor vehicle
Procédé de climatisation dýun habitacle de véhicule automobile

(30) Priorität: 16.06.2011 DE 102011077665
(43) Veröffentlichungstag der Anmeldung: 19.12.2012
(73) Patentinhaber: ROBERT BOSCH GMBH, 70442 Stuttgart (DE)
(72) Erfinder: Heyse, Joerg, 74354 Besigheim (DE); Kobiela, Fanny, 74399 Walheim (DE); Demmer, Thomas, 70184 Stuttgart (DE)

(56) Entgegenhaltungen:
- EP-A2- 1 591 282
- DE-A1-102009 029 991
- FR-A1- 2 864 854

## Beschreibung

Die Erfindung betrifft ein Verfahren zum Klimatisieren eines Kraftfahrzeuginnenraums. Weiterhin betrifft die Erfindung ein Steuergerät zum Ausführen eines derartigen Verfahrens.

### Stand der Technik

Eine Klimatisierung (Heizung/Kühlung) eines Innenraums eines Kraftfahrzeugs stellt als ein Hauptverbraucher elektrischer Energie eines Kraftfahrzeug-Hochvolt-Akkumulators (Fahrzeugbatterie) einen wesentlichen, einschränkenden Faktor auf eine Reichweite des Kraftfahrzeugs, insbesondere eines Elektrofahrzeugs dar. Gleichzeitig spielt sie eine auch wesentliche Rolle für ein Wohlbefinden von Insassen des Kraftfahrzeugs. Verlässt ein thermisches Empfinden der Fahrzeuginsassen einen Wohlfühlbereich zu stark bzw. zu lang, können Akzeptanzprobleme und daraus potentiell Absatzprobleme für die Kraftfahrzeuge resultieren. Zudem spielt die Reichweite des Kraftfahrzeugs eine bedeutende Rolle für die Akzeptanz und Nutzung durch Endkunden.

Eine Einrichtung zur Klimatisierung mit den Merkmalen des Oberbegriffs des Anspruchs 1 ist aus FR 2 864 854 A1 bekannt.

### Offenbarung der Erfindung

Es ist daher die Aufgabe der vorliegenden Erfindung, ein verbessertes Verfahren zur Klimatisierung eines Kraftfahrzeugs unter Berücksichtigung von Energieverbrauchsaspekten bereitzustellen.

Die Aufgabe wird gelöst mittels eines Verfahrens zum Klimatisieren eines Kraftfahrzeuginnenraums, wobei von einem Nutzer des Kraftfahrzeugs ein Sollwert einer Innenraumtemperatur eingestellt wird, umfassend:
- zeitabhängiges Einregeln des Sollwerts ausgehend von einer bestehenden Innenraumtemperatur; wobei der Sollwert in Abhängigkeit von der Zeit veränderlich ausgelegt ist und sich langfristig auf einen Wert in einem Temperaturbereich um den eingestellten Sollwert herum einpegelt, wobei der Temperaturbereich einem Bereich thermischen Wohlbefindens des Nutzers entspricht.

Mittels des erfindungsgemäßen Verfahrens ist es vorteilhaft möglich, sowohl einen Energieverbrauch des Kraftfahrzeugs für das Heizen/Kühlen zu optimieren bzw. zu verringern als auch ein Wohlbefinden der Fahrzeuginsassen beim Heizen/Kühlen nicht ungünstig zu beeinflussen. Somit werden beim Klimatisieren des Fahrzeuginnenraums Energieverbrauchs- und Komfortaspekte günstig im Sinne des Endkunden berücksichtigt.

Eine vorteilhafte Weiterbildung des Verfahrens sieht vor, dass sich der Sollwert auf einen Randwert des Temperaturbereichs thermischen Wohlbefindens einpegelt, wobei sich der Sollwert in einem Heizfall auf einen unteren Randwert und in einem Kühlfall auf einen oberen Randwert einpegelt. Auf diese Weise wird vorteilhaft ein Sollwert der Innenraumtemperatur sowohl in einem Heizfall als auch in einem Kühlfall derart eingeregelt, dass er innerhalb eines thermisch komfortablen Temperaturbereichs liegt und aufgrund seiner Randlage in diesem Temperaturbereich effektiv zu einer Energieersparnis des Kraftfahrzeugs beitragen kann. Ein komfort- und energiesparoptimierter Modus des Verfahrens wird auf diese Weise erreicht.

Eine vorteilhafte Weiterbildung des Verfahrens sieht vor, dass der Sollwert während des Einregelns einen Mittelwert des Temperaturbereichs thermischen Wohlbefindens wenigstens teilweise überschwingt. Auf diese Weise wird beim Nutzer aus physiologischen Gründen ein subjektives Temperatur- bzw. Temperaturänderungsempfinden schneller erreicht, wodurch dem Nutzer beim Ausführen des Verfahrens ein erhöhter Nutzungskomfort bereitgestellt wird.

Gemäß einer bevorzugten Ausführungsform des Verfahrens ist vorgesehen, dass der Sollwert während des Einregelns einen Mittelwert des Temperaturbereichs thermischen Wohlbefindens nicht überschwingt. Dadurch ist ein Gradient des Temperaturverlaufs insgesamt eher flach ausgebildet, wodurch das Verfahren vorteilhaft besonders energiesparend ausgeführt werden kann.

Gemäß einer bevorzugten Ausführungsform des Verfahrens ist vorgesehen, dass ein Gradient eines Verlaufs des Sollwerts derart ausgebildet ist, dass eine Änderung des Sollwerts der Innenraumtemperatur für den Nutzer nicht wahrnehmbar ist. Dadurch kann sowohl im energiesparoptimierten als auch im komfortoptimierten Modus des erfindungsgemäßen Verfahrens sichergestellt werden, dass ein thermisch komfortabler Temperaturbereich für den Nutzer zu keiner Zeit verlassen wird.

Eine bevorzugte Ausführungsform des Verfahrens sieht vor, dass der Gradient vom Nutzer eingestellt wird. Dadurch kann das Verfahren an individuelle Bedürfnisse von unterschiedlichen Nutzern des Kraftfahrzeugs angepasst werden, die unter Umständen verschiedene Ausgestaltungen des eingeregelten Sollwertverlaufs bevorzugen.

Gemäß einer vorteilhaften Weiterbildung ist vorgesehen, dass das Verfahren nach einer Aktivierung durch den Nutzer oder vollautomatisch im Hintergrund laufend durchgeführt wird. Auf diese Weise ist eine Art einer Ausführung des Verfahrens diversifiziert, wodurch vorteilhaft ein Nutzwert für den Anwender erhöht ist.

Gemäß einer bevorzugten Ausführungsform des Verfahrens ist vorgesehen, dass es mit einer Vorkonditionierung der Innenraumtemperatur kombiniert wird. Vorteilhaft ist es mittels der Vorkonditionierung möglich, eine Innenraumtemperatur des Kraftfahrzeugs vor einem Fahrtbeginn voreinzustellen, wodurch in einem nachfolgenden Fahrbetrieb des Kraftfahrzeugs eine besonders energieschonende Ausführung des Verfahrens unterstützt ist.

Eine vorteilhafte Weiterbildung des Verfahrens sieht vor, dass es mit einem Vor-Heizen und/oder einem Vor-Kühlen des Kraftfahrzeuginnenraums kombiniert wird. Vorteilhaft kann dadurch das Verfahren sowohl im Winter mittels Vor-Heizen als auch im Sommer mittels Vor-Kühlen energieschonend ausgeführt werden.

Die Erfindung wird nachfolgend anhand von drei Figuren detailliert beschrieben, wobei die Figuren vor allem einer Erläuterung der erfindungswesentlichen Prinzipien und Konzepte dienen. Insbesondere ist nicht gedacht, dass den Figuren konkrete Messwerte, Gradienten oder sonstige Parameter entnommen werden können.

In den Figuren zeigt:
- Fig. 1: einen prinzipiellen Zeitverlauf eines erfindungsgemäßen Einregelns des Sollwerts der Innenraumtemperatur beim Heizen;
- Fig. 2: einen prinzipiellen Zeitverlauf eines erfindungsgemäßen Einregelns des Sollwerts der Innenraumtemperatur beim Kühlen; und
- Fig. 3: einen prinzipiellen Zeitverlauf eines erfindungsgemäßen Einregelns des Sollwerts der Innenraumtemperatur bei einer Kombination mit Vorkonditionierung.

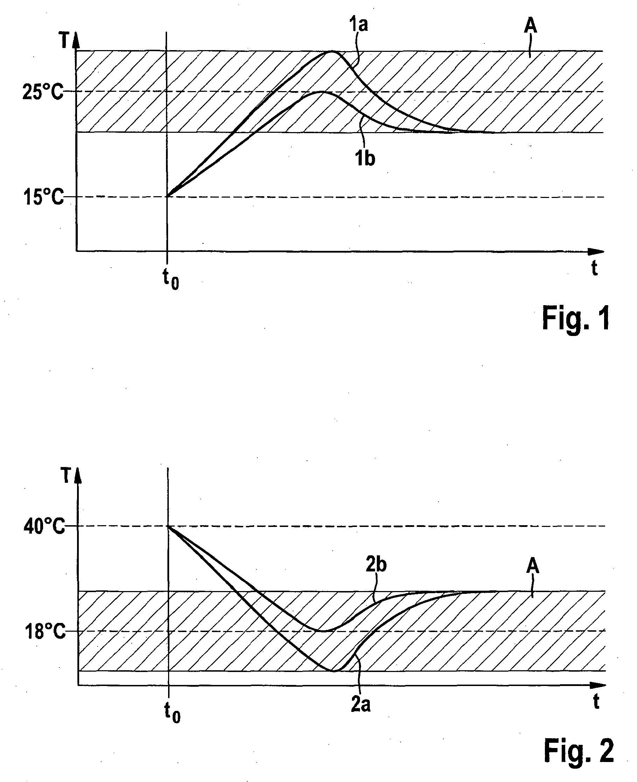

Figur 1 zeigt in einem Zeitdiagramm eine Ausführungsform eines erfindungsgemäßen Verlaufs eines Sollwerts einer Innenraumtemperatur T eines Kraftfahrzeuginnenraums. Ein spezifischer Bereich des Sollwerts der Innenraumtemperatur im Bereich um ca. 25°C herum (schraffiert dargestellt und mit "A" bezeichnet) stellt einen Bereich thermischen Wohlbefindens für einen Insassen des Kraftfahrzeugs dar. Die Figur illustriert einen Heizfall, wobei (beispielsweise im Winter) eine Innenraumtemperatur des Kraftfahrzeugs ausgehend von einer Innenraumtemperatur von ca. 15°C auf eine Temperatur im thermisch komfortablen Bereich um ca. 25°C herum geregelt wird.

Zu diesem Zweck stellt ein Insasse des Kraftfahrzeugs zum Zeitpunkt t₀ die gewünschte Solltemperatur 25°C ein. Ein Verlauf 1a des Sollwerts der Innenraumtemperatur über der Zeit zeigt einen komfortorientierten Modus des erfindungsgemäßen Verfahrens. Es ist bei diesem Modus erkennbar, dass der Sollwertverlauf zu Beginn relativ rasch ansteigt und den Bereich der Wunsch-Solltemperatur von 25°C zeitweise überschwingt, um sich danach langfristig adaptiv einem Wert zu nähern, der unterhalb der eingestellten Wunsch-Solltemperatur von 25°C, aber noch innerhalb des thermischen Wohlfühlbereichs A liegt, und sich auf diesem Wert einzupegeln. Die dadurch ausgelöste anfangs rasche Temperaturänderung führt dazu, dass sie der Insasse gut erkennen und dadurch ein nachfolgender Heizaufwand reduziert sein kann. Obwohl in Figur 1 ein asymptotisches Annähern des Sollwertverlaufs an den Wert unterhalb der Wunsch-Solltemperatur gezeigt ist, versteht es sich von selbst, dass auch andere Annäherungsarten des Sollwertverlaufs an den Wert unterhalb der Wunsch-Solltemperatur denkbar sind. Beispielsweise kann das Einregeln des Sollwertverlaufs mit einem im Wesentlichen gleichbleibenden Gradienten ausgeführt werden.

Der erfindungsgemäße Sollwertverlauf berücksichtigt ein physiologisches Temperaturempfinden des Menschen insofern, als der Sollwertverlauf durch die stark ausgeprägte Temperaturänderung zu Beginn geprägt ist, wodurch ein thermisches Wohlgefühl subjektiv schneller erreicht wird. Das Temperaturempfinden des Insassen wird durch diese Verlaufscharakteristik zudem auch nicht nachteilig beeinflusst, da sich der im Laufe der Zeit an einen Wert unterhalb der eingestellten Solltemperatur annähernde Wert den Bereich thermischen Wohlbefindens A nicht verlässt. Dadurch kann vorteilhaft ein Energieaufwand zur Heizung des Innenraums des Kraftfahrzeugs verringert werden.

Ein Verlauf 1 b zeigt einen energiesparoptimierten Modus des erfindungsgemäßen Verfahrens für einen Heizfall. Es ist erkennbar, dass der Gradient des Verlaufs im Vergleich mit dem Verlauf 1a zu Beginn geringer ausfällt, was zur Folge hat, dass der Verlauf des Sollwerts der Innenraumtemperatur den eingestellten Wunsch-Sollwert von 25° nicht überschwingt. Nach Erreichen dieses Sollwerts nähert sich die Soll-Temperatur langfristig ebenfalls innerhalb des Bereichs komfortablen Wohlbefindens A an einen Wert unterhalb von 25°C an und pegelt sich auf diesen ein. Durch diesen, verglichen mit dem Verlauf 1a, gemäßigteren Gradientenverlauf der Sollwert-Kurve ist es unter energetischen Aspekten möglich, den Energieaufwand für die Klimaanlage des Kraftfahrzeugs zu reduzieren, da die Klimaanlage eine geringere Temperaturdifferenz überwinden muss. Dennoch entsteht für den Insassen ebenfalls kein Diskomfort und er wird, ebenso wie im Fall des Verlaufs 1a, an eine Temperatur geringfügig unterhalb der eingestellten Wunschtemperatur von 25°C gewöhnt. Selbstverständlich kann sich die Soll-Temperatur, zusätzlich zu den beiden dargestellten Verläufen 1a, 1b, auf jeden beliebigen Wert, der im Wesentlichen nicht genau dem eingestellten Sollwert innerhalb des thermisch komfortablen Temperaturbereichs A entspricht, einpegeln.

In Figur 2 ist eine erfindungsgemäße Einregelung eines Sollwerts einer Innenraumtemperatur des Kraftfahrzeugs in einem Kühlfall (beispielsweise im Sommer) ohne Vorkonditionierung des Kraftfahrzeuginnenraums dargestellt. Ein Temperaturbereich um ca. 18°C herum ist auch hier als ein Bereich thermischen Wohlbefindens dargestellt (schraffiert, mit "A" bezeichnet). In einem Verlauf 2a des Sollwerts der Innentemperatur stellt ein Insasse des Kraftfahrzeugs zum Zeitpunkt t₀ eine gewünschte Temperatur von 18°C für den Innenraum des Kraftfahrzeugs ein. Ähnlich wie im Fall des Verlaufs 1a ist der Gradient des Sollwert-Temperaturverlaufs 2a derart ausgebildet, dass er während des Einregelns die eingestellte Wunschtemperatur von 18°C zeitweise überschwingt und sich danach langfristig an eine Temperatur oberhalb von 18°C annähert und sich auf diese Temperatur einpegelt. Ein Verlauf 2b des Sollwerts der Innenraumtemperatur entspricht dem energiesparoptimierten Modus gemäß Verlauf 1 b für den Kühlfall. Bei diesem Verlauf wird auch im Kühlfall der Gradient des Sollwertverlaufs gering gehalten und dadurch der Betrieb der Klimatisierungsanlage des Kraftfahrzeugs energieschonend ausgestaltet. Auch in diesem Fall ist erfindungsgemäß jede Abweichung der langfristig eingeregelten Solltemperatur vom eingestellten Sollwert denkbar, sofern sie nur innerhalb des thermischen Komfortbereichs A liegt.

Die mittels der Figuren 1 und 2 beschriebenen Verläufe 1a, 1 b, 2a, 2b regeln den Sollzustand der Innenraumtemperatur also stets auf eine Temperatur innerhalb des Bereichs thermischen Wohlbefindens A, wozu keine weiteren Bedieneingaben durch den Insassen erforderlich sind. Dabei erfolgt das erfindungsgemäße Einregeln des Sollwerts ausgehend von einer im Fahrzeuginnenraum vorhandenen Temperatur, wobei der Sollwert in Abhängigkeit von der Zeit veränderlich ausgelegt ist und sich langfristig auf einen Wert in einem Temperaturbereich um den eingestellten Sollwert herum einpegelt. Dieser Temperaturbereich entspricht erfindungsgemäß einem Bereich thermischen Wohlbefindens des Nutzers. Alle beschriebenen Verläufe 1a, 1b, 2a, 2b nutzen die grundlegende physiologische Gegebenheit aus, dass das Temperaturempfinden eines Menschen unter anderem stark von einem Erwärmungs- bzw. Abkühlungsgrad der Haut abhängt. In zunächst kalter Umgebung setzt ein Wärmegefühl besonders schnell ein, wenn die Hauttemperatur zunächst schnell erhöht wird, ebenso ist für ein rasches thermisches Wohlbefinden eine schnelle Abkühlung der Haut in zunächst warmer Umgebung erforderlich. Diese Erkenntnis wird insbesondere für die Ausgestaltung der erfindungsgemäßen Verläufe 1a und 2a ausgenutzt.

Im Rahmen der sich anschließenden Gewöhnungsphase kann eine langsame Annäherung an eine Temperatur im Wohlfühlbereich A helfen, Heizungs- bzw. Kühlungsenergie zu sparen. Das mittels der Figuren 1 und 2 dargestellte Klimatisierungskonzept kann für die Insassen eines Kraftfahrzeugs in beliebiger Weise zu- und abschaltbar ausgestaltet sein.

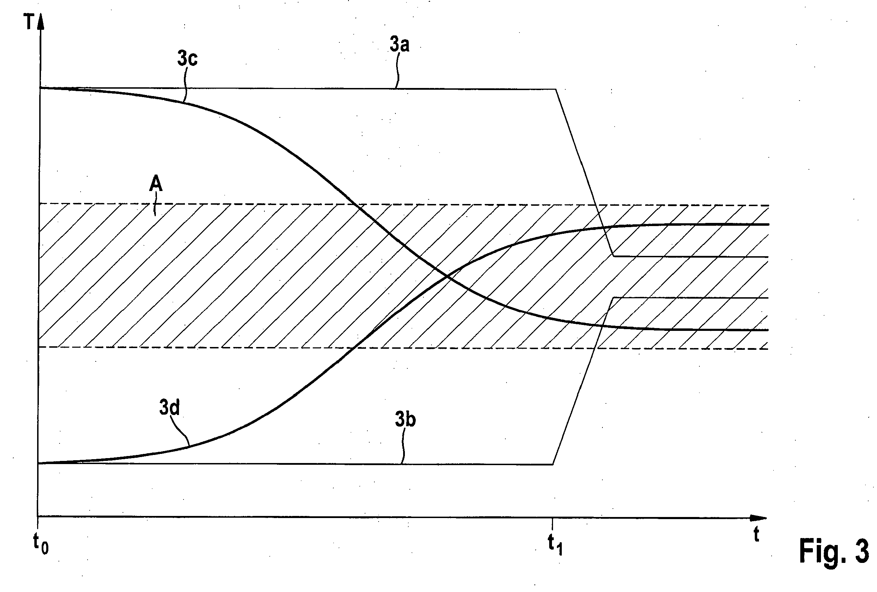

Figur 3 zeigt eine Kombination des erfindungsgemäßen Verfahrens mit einer Vorkonditionierung des Fahrzeuginnenraums in Form von Vor-Heizen bzw. Vor-Kühlen (beispielsweise in einem Elektrofahrzeug) vor Fahrtbeginn. Dadurch wird der Innenraum des Kraftfahrzeugs bereits vor Fahrtbeginn, beispielsweise mittels elektrischer Energie aus einem externen Stromnetz, auf eine gewünschte Temperatur vorkonditioniert. Auf diese Weise ist bereits bei Fahrtbeginn ein definierter, gewünschter Temperaturzustand im Fahrzeuginnenraum vorhanden. Zudem ist vorteilhaft der Ladezustand der Fahrzeugbatterie bei Fahrtbeginn noch sehr gut, da das Vorkonditionieren nicht mittels der Fahrzeugbatterie, sondern mittels des externen Stromnetzes vorgenommen wurde. Dadurch kann ein Energieaufwand zum Betreiben der Heizung oder der Klimaanlage während der Fahrt minimiert werden, wobei der Energieaufwand günstigerweise einer geladenen Batterie entnommen werden kann. Der minimierte Energieaufwand für die Heizung oder die Klimaanlage resultiert auch aus der Tatsache, dass ab Fahrtbeginn im Wesentlichen nur das bereits bestehende Temperaturniveau gehalten zu werden braucht.

Figur 3 zeigt vier Zeitverläufe 3a, 3b, 3c, 3d der Solltemperatur T im Innenraum eines Kraftfahrzeugs, wobei die Verläufe 3a und 3b solche des Stands der Technik sind. Ein Zeitpunkt t₀ entspricht dem Zeitpunkt des Fahrtbeginns. Ein Sollwertverlauf 3a findet zum Zeitpunkt des Fahrtbeginns t₀ bereits eine, mittels VorHeizen voreingestellte Innenraumtemperatur vor, wobei die voreingestellte Temperatur außerhalb des Bereichs thermischen Wohlbefindens liegen kann. Konventionell ist vorgesehen, dass nach einer Zeitdauer zum Zeitpunkt t₁, wenn sich der Fahrer an die Temperatur des Innenraums des Kraftfahrzeugs gewöhnt hat, manuell auf eine niedrigere Soll-Temperaturstufe umgeschaltet wird. Dies ist beim Sollwertverlauf 3a durch die stufenartige Absenkung der Solltemperatur T angedeutet, wobei die abgesenkte Temperatur im Bereich thermischen Wohlbefindens A liegt.

Erfindungsgemäß ist nunmehr vorgesehen, dass das mit Vor-Heizen kombinierte Verfahren einen Verlauf 3c der Solltemperatur T adaptiv auf einen Wert der Solltemperatur T innerhalb des Bereichs thermischen Wohlbefindens A einregelt. Dabei kann dabei vorteilhaft ein Langzeitwert der Solltemperatur geringer sein als jener, auf den durch manuelle Umschaltung gemäß dem herkömmlichen Verlauf 3a zum Zeitpunkt t₁ zurückgeschaltet wird. Günstigerweise kann daraus ein energiesparender Betrieb der Klimaanlage resultieren.

In analoger Weise zeigt ein herkömmlicher Sollwertverlauf 3b eine manuelle Einstellung eines gewünschten Temperatur-Sollwertverlaufs im Falle von Vor-Kühlen (beispielsweise im Sommer). Dabei wird die Innenraumtemperatur des Kraftfahrzeugs, beispielsweise mittels elektrischer Energie aus einem externen Stromnetz, vor Fahrtbeginn in gewünschter Weise reduziert, so dass die Klimaanlage bereits zu Fahrtbeginn einen entsprechenden Temperaturwert vorfindet und mit anschließend geringerem Energieaufwand lediglich zur Erhaltung des bestehenden Temperaturniveaus betrieben werden kann. Zum Zeitpunkt t₁ nimmt der Fahrer eine manuelle Umschaltung der Klimaanlage auf eine höhere Regelstufe der Klimaanlage vor, welche innerhalb des thermischen Wohlfühlbereichs A liegt.

Demgegenüber ist erfindungsgemäß vorgesehen, dass in einem Sollwertverlauf 3d ein adaptives Regeln des mittels Vor-Kühlen voreingestellten Sollwerts in einen Bereich thermischen Wohlbefindens A durchgeführt wird. Dabei kann ein langfristiger Endwert der Solltemperatur höher als der durch manuelles Höherschalten der Klimaanlage eingestellte Solltemperaturwert gemäß Verlauf 3b liegen. Dadurch kann, ebenso wie im Falle des Verlaufs 3c, ein energieschonender Betrieb der Klimaanlage des Kraftfahrzeugs erreicht werden.

Aus den beiden Verläufen 3c und 3d der Figur 3 ist erkennbar, dass im Vergleich mit den herkömmlichen Verläufen 3a und 3b von Anfang an von einer definierten Innenraumtemperatur ausgegangen wird. Danach wird nur mehr eine Anpassung der Solltemperatur an einen energieoptimierten Temperaturbereich thermischen Wohlbefindens A durchgeführt, wobei große Temperaturunterschiede, die unter Umständen bei fehlender Vorkonditionierung vorliegen können, nicht zu überwinden sind. Zudem ist mittels der erfindungsgemäßen Verläufe 3c, 3d vorteilhafter Weise eine Einstellung einer energiesparenden und komfortoptimierten Endtemperatur möglich.

In der beschriebenen Weise kann das erfindungsgemäße Verfahren somit auch für eine Kombination mit Vor-Heizen bzw. Vor-Kühlen vorgesehen sein. Vorzugsweise ist diese Kombination in Elektrofahrzeugen sinnvoll, wo die eingesparte elektrische Energie in besonderer Weise den Energieressourcen für das elektrische Antriebskonzept und damit der Reichweite des Elektrofahrzeugs zugute kommt. Selbstverständlich können aber auch Kraftfahrzeuge mit anderen Antriebskonzepten Nutzen aus dem erfindungsgemäßen Klimatisierungskonzept ziehen.

Das erfindungsgemäße Verfahren kann entweder automatisch im Hintergrund laufend, oder nach einer definierten Aktivierung durch den Nutzer des Kraftfahrzeugs betrieben werden. Es ist ferner auch denkbar, dass ein Gradient eines Teils des Sollwertverlaufs oder des gesamten Sollwertverlaufs der Innenraumtemperatur durch den Nutzer einstellbar ist, wodurch das Verfahren vorteilhaft an individuelle Temperaturempfinden von unterschiedlichen Nutzern adaptierbar ist.

Ein elektronisches Steuergerät für ein Kraftfahrzeug kann zu einem Ausführen des Verfahrens ausgestaltet sein, wobei das erfindungsgemäße Verfahren mit bekannten technischen Mitteln implementiert sein kann. Beispielsweise kann das Steuergerät als ein Öko-Klimatisierungsgerät ausgebildet sein, welches es dem Nutzer erlaubt, die Klimatisierung des Fahrzeuginnenraums in besonders energiebewusster Weise zu bewerkstelligen. Das erfindungsgemäße Verfahren ist beispielsweise besonders geeignet für ein Elektrofahrzeug, ein Plug-in-Hybrid-Elektro-Kraftfahrzeug oder ein Elektro-Kraftfahrzeug mit Reichweitenverlängerer (englisch: Range Extender), welche eine möglichst große rein elektrische Reichweite intendieren. Vorteilhaft kann bei derartigen Fahrzeugtypen eine rein elektrische Reichweite ressourcen- und umweltschonend erhöht sein. Zusammenfassend wird ein Klimatisierungskonzept für ein Kraftfahrzeug vorgeschlagen, welches in Abhängigkeit von der Zeit eine veränderliche Solltemperatur vorsieht. Die Änderung bzw. Einregelung der Solltemperatur berücksichtigt eine physiologisch bedingte Anpassungsfähigkeit des Menschen an eine neue thermische Umgebung, wodurch ein thermisches Wohlbefinden während des gesamten zeitlichen Verlaufs des Einregelns der Solltemperatur nicht beeinträchtigt wird. Zu diesem Zweck ist ein Gradient des Sollwertverlaufs derart ausgebildet, dass die damit verbundene Temperaturänderung für die Insassen des Kraftfahrzeugs im Wesentlichen nicht spürbar ist. Zudem kann der erfindungsgemäße zeitliche Verlauf der Solltemperatur dazu beitragen, dass ein Energiebedarf zum Heizen bzw. Kühlen des Kraftfahrzeugs verringert ist. Erfindungsgemäß wird der Fahrer des Kraftfahrzeugs nach einer manuell vorgenommenen Einstellung einer Wunsch-Solltemperatur langsam an eine etwas niedrigere Temperatur (im Heizfall) bzw. an eine etwas höhere Temperatur (im Kühlfall) gewöhnt, wobei diese Temperaturen jeweils in einem thermisch komfortablen Temperaturbereich des Fahrers liegen.

Zu einer Komforterhöhung kann in einer zeitlich frühen Phase des Einregelns der Solltemperatur eine extremere Temperatur als die Wunschtemperatur realisiert werden. Beispielsweise kann bei einem Kühlungswunsch eine etwas stärkere Kühlung, bei einem Heizungswunsch eine etwas stärkere Heizung durchgeführt werden. Nach einer ersten Phase wird der Nutzer sodann mittels langsamer Temperaturänderung an ein energieoptimiertes Temperaturniveau im Fahrzeuginnenraum gewöhnt.

Es versteht sich von selbst, dass der Fachmann die vorangehend beschriebenen Merkmale und Konzepte in fachmännischer Weise abändern und miteinander kombinieren kann, jedoch im Rahmen der Ansprüche.

## Patentansprüche

1. Verfahren zum Klimatisieren eines Kraftfahrzeuginnenraums, wobei von einem Nutzer des Kraftfahrzeugs ein Sollwert einer Innenraumtemperatur (T) eingestellt wird, umfassend:
- zeitabhängiges Einregeln des Sollwerts (1a, 1b, 2a, 2b, 3c, 3d) ausgehend von einer bestehenden Innenraumtemperatur (T), wobei der Sollwert in Abhängigkeit von der Zeit (t) veränderlich ausgelegt ist und sich langfristig auf einen Wert in einem Temperaturbereich (A) um den eingestellten Sollwert herum einpegelt, wobei der Temperaturbereich (A) einem Bereich thermischen Wohlbefindens des Nutzers entspricht,
**dadurch gekennzeichnet, dass** sich der Sollwert (1a, 1b, 2a, 2b, 3c, 3d) auf einen Randwert des Temperaturbereichs (A) thermischen Wohlbefindens einpegelt, wobei sich der Sollwert in einem Heizfall auf einen unteren Randwert und in einem Kühlfall auf einen oberen Randwert einpegelt.

2. Verfahren nach Anspruch 1, wobei der Sollwert (1a, 1b, 2a, 2b, 3c, 3d) während des Einregelns einen Mittelwert des Temperaturbereichs thermischen Wohlbefindens wenigstens teilweise überschwingt.

3. Verfahren nach Anspruch 1, wobei der Sollwert (1a, 1b, 2a, 2b, 3c, 3d) während des Einregelns einen Mittelwert des Temperaturbereichs thermischen Wohlbefindens nicht überschwingt.

4. Verfahren nach einem der Ansprüche 1 bis 3, wobei ein Gradient eines Verlaufs des Sollwerts (1a, 1b, 2a, 2b, 3c, 3d) derart ausgebildet ist, dass eine Änderung des Sollwerts der Innenraumtemperatur für den Nutzer nicht wahrnehmbar ist.

5. Verfahren nach Anspruch 4, wobei der Gradient vom Nutzer eingestellt wird.

6. Verfahren nach einem der Ansprüche 1 bis 5, wobei das Verfahren nach einer Aktivierung durch den Nutzer oder vollautomatisch im Hintergrund laufend ausgeführt wird.

7. Verfahren nach einem der Ansprüche 1 bis 6, wobei das Verfahren mit einer Vorkonditionierung der Innenraumtemperatur kombiniert wird.

8. Verfahren nach Anspruch 7, wobei es mit einem Vor-Heizen und/oder mit einem Vor-Kühlen des Kraftfahrzeuginnenraums kombiniert wird.

9. Steuergerät zur Ausführung des Verfahrens nach einem der Ansprüche 1 bis 8.

10. Steuergerät nach Anspruch 9, wobei das Verfahren optional ausführbar ist.

11. Verwendung eines Steuergeräts nach Anspruch 9 oder 10 in einem Elektrofahrzeug.

## Claims

1. Method for air-conditioning the passenger compartment of a motor vehicle, wherein a setpoint value of a passenger compartment temperature (T) is set by a user of the motor vehicle, comprising:
- time-dependent adjustment of the setpoint value (1a, 1b, 2a, 2b, 3c, 3d) as a function of an existing passenger compartment temperature (T), wherein the setpoint value is made variable as a function of the time (t) and settles over the long term at a value in a temperature range (A) around the setpoint value which has been set, wherein the temperature range (A) corresponds to a range of thermal comfort of the user,
**characterized in that** the setpoint value (1a, 1b, 2a, 2b, 3c, 3d) settles at a peripheral value of the temperature range (A) of thermal comfort, wherein in a case of heating the setpoint value settles at a lower peripheral value, and in a case of cooling it settles at an upper peripheral value.

2. Method according to Claim 1, wherein the setpoint value (1a, 1b, 2a, 2b, 3c, 3d) at least partially overshoots a mean value of the temperature range of thermal comfort during the adjustment.

3. Method according to Claim 1, wherein the setpoint value (1a, 1b, 2a, 2b, 3c, 3d) does not overshoot a mean value of the temperature range of thermal comfort during the adjustment.

4. Method according to one of Claims 1 to 3, wherein a gradient of a profile of the setpoint value (1a, 1b, 2a, 2b, 3c, 3d) is embodied in such a way that a change in the setpoint value of the passenger compartment temperature cannot be perceived by the user.

5. Method according to Claim 4, wherein the gradient is set by the user.

6. Method according to one of Claims 1 to 5, wherein the method is carried out after activation by the user or in such a way that it runs fully automatically in the background.

7. Method according to one of Claims 1 to 6, wherein the method is combined with pre-conditioning of the passenger compartment temperature.

8. Method according to Claim 7, wherein the method is combined with pre-heating and/or with pre-cooling of the passenger compartment of the motor vehicle.

9. Control unit for carrying out the method according to one of Claims 1 to 8.

10. Control unit according to Claim 9, wherein the method can be carried out optionally.

11. Use of a control unit according to Claim 9 or 10 in an electric vehicle.

## Revendications

1. Procédé de climatisation de l'habitacle d'un véhicule, dans lequel une valeur de consigne de la température (T) de l'habitacle est ajustée par l'utilisateur du véhicule automobile, le procédé comportant les étapes suivantes :
régulation de la valeur de consigne (1a, 1b, 2a, 2b, 3c, 3d) en fonction du temps en partant de la température (T) qui prévaut dans l'habitacle, la valeur de consigne étant conçue pour varier en fonction du temps (t) et s'ajustant à long terme à une valeur située dans une plage de température (A) qui entoure la valeur de consigne réglée, la plage de température (A) correspondant à une plage de confort thermique de l'utilisateur,
**caractérisé en ce que**
la valeur de consigne (1a, 1b, 2a, 2b, 3c, 3d) s'ajuste à une valeur de bord de la plage de température (A) de confort thermique et **en ce que** la valeur de consigne d'ajuste à une valeur de bord basse en cas de chauffage et à une valeur de bord haute en cas de refroidissement.

2. Procédé selon la revendication 1, dans lequel au moins pendant une partie du temps, la valeur de consigne (1a, 1b, 2a, 2b, 3c, 3d) dépasse une valeur moyenne de la plage de température de confort thermique pendant la régulation.

3. Procédé selon la revendication 1, dans lequel la valeur de consigne (1a, 1b, 2a, 2b, 3c, 3d) ne dépasse pas une valeur moyenne de la plage de température de confort thermique pendant la régulation.

4. Procédé selon l'une des revendications 1 à 3, dans lequel le gradient d'évolution de la valeur de consigne (1a, 1b, 2a, 2b, 3c, 3d) est configuré de telle sorte qu'une modification de la valeur de consigne de la température de l'habitacle ne puisse être perçue par l'utilisateur.

5. Procédé selon la revendication 4, dans lequel le gradient est ajusté par l'utilisateur.

6. Procédé selon l'une des revendications 1 à 5, dans lequel, après activation, le procédé est exécuté par l'utilisateur ou de manière entièrement automatique en se déroulant en arrière-plan.

7. Procédé selon l'une des revendications 1 à 6, dans lequel le procédé est combiné à un pré-conditionnement de la température de l'habitacle.

8. Procédé selon la revendication 7, combiné avec un pré-chauffage et/ou un pré-refroidissement de l'habitacle du véhicule.

9. Appareil de commande destiné à exécuter le procédé selon l'une des revendications 1 à 8.

10. Appareil de commande selon la revendication 9, dans lequel le procédé peut être exécuté de façon facultative.

11. Utilisation d'un appareil de commande selon les revendications 9 ou 10 dans un véhicule électrique.
